(19) Europäisches Patentamt
European Patent Office
Office européen des brevets

(11) **EP 1 567 919 B1**

(12) **EUROPÄISCHE PATENTSCHRIFT**

(45) Veröffentlichungstag und Bekanntmachung des Hinweises auf die Patenterteilung:
**28.01.2009 Patentblatt 2009/05**

(51) Int Cl.:
***G05B 17/00*** *(2006.01)*          ***G01D 1/16*** *(2006.01)*

(21) Anmeldenummer: 03795820.4

(22) Anmeldetag: **14.11.2003**

(86) Internationale Anmeldenummer:
**PCT/EP2003/012754**

(87) Internationale Veröffentlichungsnummer:
**WO 2004/059401 (15.07.2004 Gazette 2004/29)**

(54) **Verfahren zur Systemanalyse zur Festlegung der Messgrössen**

Method and device for analysing a technical system to determine measurements of the system

Procédé d'analyse d'un système permettant de déterminer des grandeurs à mesurer

(84) Benannte Vertragsstaaten:
**DE ES FR GB IT**

(30) Priorität: **29.11.2002 DE 10255959**

(43) Veröffentlichungstag der Anmeldung:
**31.08.2005 Patentblatt 2005/35**

(73) Patentinhaber: **SIEMENS AKTIENGESELLSCHAFT
80333 München (DE)**

(72) Erfinder:
• **ALTPETER, Reinhold
91056 Erlangen (DE)**
• **HOEVER, Georg
52076 Aachen (DE)**
• **WEBER, Ingo
Oviedo, FI 32765 (US)**

(56) Entgegenhaltungen:
EP-A- 0 770 946          WO-A-00/65414
US-A- 4 977 531          US-A- 5 267 277

• **PATENT ABSTRACTS OF JAPAN vol. 018, no. 555 (P-1816), 21. Oktober 1994 (1994-10-21) & JP 06 201413 A (NISSAN MOTOR CO LTD), 19. Juli 1994 (1994-07-19)**

**Beschreibung**

Die Erfindung betrifft ein Verfahren und eine Vorrichtung zum Entwurf eines technischen Systems sowie ein entsprechendes Computerprogramm-Produkt.

Bei der Beschreibung eines technischen Systems, beispielsweise einer Kraftwerksanlage, werden verschiedene Parameter, wie z. B. Drücke, Massenflüsse u.s.w. herangezogen. Die Parameter gehorchen bestimmten physikalischen Gesetzen, wie z. B. Massen- oder Energiebilanzen, welche sich durch ein Gleichungssystem ausdrücken lassen. Die Lösungen des Gleichungssystems sind die Zustandsgrößen des technischen Systems. Aus diesen Zustandsgrößen können wiederum für den Betrieb des technischen Systems relevante Diagnosegrößen berechnet werden, wie z. B. der Wirkungsgrad einer Kraftwerksanlage. Der konkrete Zustand eines technischen Systems kann darüber hinaus durch Messungen erfasst werden. Die Messgrößen der Messungen können direkt den Wert einer Zustandsgröße wiedergeben; es können aber auch aus den Zustandsgrößen abgeleitete Messgrößen gemessen werden. Beispielsweise kann die Temperatur eines technischen Systems gemessen werden, während die Zustandsgrößen des Systems die Enthalpie und der Druck sind. Zur Bestimmung der Zustandsgrößen aus den Messgrößen führt man im allgemeinen eine Messung durch und sucht die Zustandsgrößen, welche das Gleichungssystem lösen und deren abgeleiteten Messgrößen möglichst nahe bei den durch die Messung ermittelten Messwerten liegen. Hierzu gibt es standardisierte Verfahren (siehe z.B. VDI-Richtlinie 2048).

Es kann das Problem auftreten, dass aufgrund einer zu geringen Anzahl von Gleichungen im Gleichungssystem bzw. einer zu geringen Anzahl von Messstellen einzelne Zustandsgrößen oder einzelne Diagnosegrößen unbestimmt bleiben. Ferner können aufgrund von Messfehlern die Zustandsgrößen bzw. die Diagnosegrößen mit großen Unsicherheiten behaftet sein. Es muss deshalb entschieden werden, durch welche Messungen die Genauigkeit bestimmter Zustandsgrößen verbessert werden kann bzw. bestimmte Zustandsgrößen überhaupt erst bestimmt werden können. Hierzu wird üblicherweise auf den Rat erfahrener Ingenieure zurückgegriffen, und die Vorschläge dieser Ingenieure lassen sich durch Simulationsprogramme überprüfen. Hierzu sind jedoch zeitaufwendige Auswertungen erforderlich.

Die WO 00/65414 offenbart ein Verfahren zum Entwurf eines technischen Systems, bei dem das System in Form einer Beschreibungsform modelliert ist. Eine Störung wird anhand einer Zufallsgröße modelliert. Das System einschließlich der Störung wird als stochastische Differenzialgleichung modelliert. Die stochastische Differenzialgleichung wird numerisch gelöst und die ermittelte Lösung zum Entwurf des technischen Systems verwendet.

Aufgabe der Erfindung ist es deshalb, ein Verfahren zum Entwurf eines technischen Systems anzugeben, bei dem systematisch ermittelt wird, wie die Messungen von einzelnen Messgrößen die Parameter des technischen Systems beeinflussen.

Diese Aufgabe wird gemäß den Merkmalen der unabhängigen Patentansprüche gelöst. Weiterbildungen der Erfindung sind in den abhängigen Ansprüchen definiert.

Das erfindungsgemäße Verfahren dient zum Entwurf eines technischen Systems, das durch Parameter umfassend Zustandsgrößen und von den Zustandsgrößen abhängige Diagnosengrößen charakterisiert ist. Unter Entwurf wird hierbei insbesondere die Analyse und/oder Änderung des technischen Systems verstanden, insbesondere die Analyse und Änderung der im technischen System vorgenommenen Messungen. Das technische System wird dabei durch ein Gleichungssystem beschrieben, wobei die Zustandsgrößen die Lösungen des Gleichungssystems sind. In den Entwurf des technischen Systems wird ein Messpark einbezogen, der erste Messgrößen umfasst, wobei die ersten Messgrößen im technischen System mit einer vorgegebenen Genauigkeit gemessen werden. Ferner sind in dem technischen System zweite, von den Zustandsgrößen abhängige Messgrößen mit einer vorgegebenen Genauigkeit messbar.

In dem erfindungsgemäßen Verfahren werden erste Sensitivitätsgrößen für die ersten Messgrößen und zweite Sensitivitätsgrößen für die zweiten Messgrößen bestimmt, wobei zur Bestimmung der ersten Sensitivitätsgrößen ermittelt wird, in welchem Maße eine Änderung der Genauigkeit der Messung der ersten Messgrößen wenigstens einen ausgewählten Parameter beeinflusst, und zur Bestimmung der zweiten Sensitivitätsgrößen ermittelt wird, in welchem Maße die Messung der zweiten Messgrößen wenigstens einen ausgewählten Parameter beeinflusst. Der Messpark wird daraufhin in Abhängigkeit von den ersten und zweiten Sensitivitätsgrößen derart verändert, dass die Genauigkeit einer oder mehrerer erster Messgrößen verändert wird und/oder eine oder mehrere erste Messgrößen aus dem Messpark herausgenommen werden und/oder eine oder mehrere zweite Messgrößen zum Messpark hinzugenommen werden. Dieser veränderte Messpark wird zum Entwurf des technischen Systems eingesetzt.

In einer bevorzugten Ausführungsform wird vorzugsweise die Genauigkeit einer ersten Messgröße erhöht, wenn die erste Sensitivitätsgröße dieser Messgröße in einem vorbestimmten Wertebereich liegt, und/oder eine erste Messgröße wird aus dem Messpark herausgenommen, wenn die erste Sensitivitätsgröße dieser Messgröße in einem vorbestimmten Wertebereich liegt, und/oder eine zweite Messgröße wird zum Messpark hinzugenommen, wenn die zweite Sensitivitätsgröße dieser Messgröße in einem vorbestimmten Wertebereich liegt. Durch die Wahl von unterschiedlichen Wertebereichen kann somit das Entwurfsverfahren an unterschiedliche benutzerspezifische Anforderungen in einfacher Art und Weise angepasst werden.

In einer bevorzugten Ausführungsform ist das technische System durch ein Gleichungssystem H(x) = (Hl (x) ... ,

Hn(x) = 0 beschrieben, wobei x = (xl, ...xn) ein Vektor ist, der als Komponenten die Zustandsgrößen xi umfasst. An dieser Stelle sei angemerkt, dass alle im Folgenden verwendeten Indizes i, j, k bzw. l natürliche Zahlen darstellen.

Zur Durchführung des erfindungsgemäßen Verfahrens werden in einer bevorzugten Ausführungsform insbesondere folgende Matrizen berechnet:

- eine Matrix $N$, die den Nullraum der Jakobimatrix von H aufspannt,
- eine Matrix $W$, so dass $W^T \cdot W$ die Inverse der Kovarianzmatrix der ersten Messgrößen $y_i = b_i(x)$ ist, wobei die Kovarianzmatrix als Einträge die Kovarianzen $\sigma_{ij}^2 = E((y_i - E(y_i))(y_j$
- $E(y_j)))$ aufweist, wobei E(y) der Erwartungswert von y ist;
- eine Matrix M, welche die pseudoinverse Matrix zu $A = W \cdot Db \cdot N$ ist, wobei Db die Jakobimatrix der ersten Messgrößen $y_i = b_i(x)$ ist.

Die Begriffe Nullraum, Jakobimatrix sowie inverse bzw. pseudoinverse Matrix sind aus der Theorie der Matrixberechnungen bekannte Definitionen (siehe beispielsweise Gene H. Golub, Charles F. van Loan: "Matrix Computations", 3rd Edition, Baltimore, London; The Johns Hopkins University Press; 1996).

In einer weiteren bevorzugten Ausführungsform der Erfindung sind die im technischen System berechneten ersten Sensitivitätsgrößen jeweils das Verhältnis der Genauigkeitsänderung eines ausgewählten Parameters zu der Genauigkeitsänderung einer ersten Messgröße, wobei der ausgewählte Parameter eine ausgewählte Zustandsgröße ist, die über die ersten Messgrößen bestimmbar ist. Das Verfahren zeichnet sich hierbei dadurch aus, dass:

- wenigstens einer der ausgewählten Parameter eine ausgewählte Zustandsgröße ist, die über die ersten Messgrößen bestimmbar ist;
- eine oder mehrere der ersten Sensitivitätsgrößen $\Phi_{y_j x_l}$ jeweils das Verhältnis der Genauigkeitsänderung $\Delta\sigma_{11}^2/x_1$ = $\Delta E((x_1 - E(x_1))^2)/x_1$ der ausgewählten Zustandsgröße $x_1$ zu der Genauigkeitsänderung $\Delta\sigma_{jj}^2/y_j = \Delta E((y_j - E(y_j))^2)/y_j$ einer ersten Messgröße $y_j$ darstellen;
- die ersten Sensitivitätsgrößen durch folgende Formel bestimmt werden:

$$\Phi_{y_j x_l} = \frac{\sigma_{jj}^2}{\sigma_{ll}^2} \cdot r_{lj}^2$$

wobei $r_{lj}$ das Element in der $l$-ten Zeile und $j$-ten Spalte der Matrix $N \cdot M \cdot W$ ist.

In einer weiteren Ausführungsform stellen die ersten Sensitivitätsgrößen jeweils das Verhältnis der Genauigkeitsänderung einer ausgewählten Diagnosegröße zu der Genauigkeitsänderung einer ersten Messgröße dar, wobei die ausgewählte Diagnosegröße über die ersten Messgrößen bestimmbar ist. Das Verfahren zeichnet sich hierbei dadurch aus, dass:

- wenigstens einer der ausgewählten Parameter eine ausgewählte Diagnosegröße ist, die über die ersten Messgrößen bestimmbar ist;
- eine Matrix Dd, welche die Jakobimatrix der Diagnosegrößen $d_i = d_i(x)$ ist, bestimmt wird;
- eine oder mehrere der ersten Sensitivitätsgrößen $\Phi_{y_j d_n}$ jeweils das Verhältnis der Genauigkeitsänderung $\Delta\sigma_{nn}^2/d_n$ = $\Delta E((d_n - E(d_n))^2)/d_n$ der ausgewählten Diagnosegröße $d_n$ zu der Genauigkeitsänderung $\Delta\sigma_{jj}^2/y_j = \Delta E((y_j - E(y_j))^2)/y_j$ einer ersten Messgröße $y_j$ darstellen;
- die ersten Sensitivitätsgrößen durch folgende Formel bestimmt werden:

$$\Phi_{y_j d_n} = \frac{\sigma_{jj}^2}{\sigma_{nn}^2} \cdot s_{nj}^2$$

wobei $s_{nj}$ das Element in der $n$-ten Zeile und $j$-ten Spalte von $Dd \cdot N \cdot M \cdot W$ ist.

In einer weiteren bevorzugten Ausführungsform stellen eine oder mehrere der zweiten Sensitivitätsgrößen jeweils die Varianz einer ausgewählten Zustandsgröße bei der Hinzunahme einer zweiten Messgröße dar, wobei die ausgewählte Zustandsgröße über die ersten Messgrößen bestimmbar ist. Das Verfahren zeichnet sich hierbei dadurch aus, dass:

- wenigstens einer der ausgewählten Parameter eine ausgewählte Zustandsgröße ist, die über die ersten Messgrößen bestimmbar ist;
- eine oder mehrere der zweiten Sensitivitätsgrößen jeweils die Varianz $\sigma_{k->xl}^2$ der ausgewählten Zustandsgröße $x_1$ bei Hinzunahme einer zweiten Messgröße, deren Wert eine Zustandsgröße $x_k$ ist, mit der Varianz $\sigma_k$ zu dem Messpark darstellen;
- die zweiten Sensitivitätsgrößen durch folgende Formel bestimmt werden:

$$\sigma_{k\to x_l}^2 = m_l^T \cdot m_l - \frac{\left(m_k^T \cdot m_l\right)^2}{\sigma_k^2 + m_k^T \cdot m_k},$$

wobei $m_i$ die $i$-te Spalte der Matrix $M^T. N$ ist.

In einer weiteren Ausführungsform der Erfindung stellen eine oder mehrere der zweiten Sensitivitätsgrößen jeweils die Varianz einer ausgewählten Diagnosegröße bei Hinzunahme einer zweiten Messgröße dar, wobei die ausgewählte Diagnosegröße über die ersten Messgrößen bestimmbar ist. Das Verfahren zeichnet sich hierbei dadurch aus, dass:

- wenigstens einer der ausgewählten Parameter eine ausgewählte Diagnosegröße ist, die über die ersten Messgrößen bestimmbar ist;
- eine Matrix Dd, welche die Jakobimatrix der Diagnosegrößen $d_i=d_i(x)$ ist, bestimmt wird;
- eine oder mehrere der zweiten Sensitivitätsgrößen jeweils die Varianz $\sigma_{k->dn}^2$ der ausgewählten Diagnosegröße $d_n$ bei Hinzunahme einer zweiten Messgröße, deren Wert eine Zustandsgröße $x_k$ ist, mit der Varianz $\sigma_k$ zu dem Messpark darstellen;
- die zweiten Sensitivitätsgrößen durch folgende Formel bestimmt werden:

$$\sigma_{k\to d_n}^2 = q_n^T \cdot q_n - \frac{\left(m_k^T \cdot q_n\right)^2}{\sigma_k^2 + m_k^T \cdot m_k}$$

wobei $m_i$ die $i$-te Spalte der Matrix $M^T \cdot N^T$ und $q_n$ die $n$-te Spalte der Matrix $M^T \cdot N^T \cdot Dd^T$ ist.

Es kann nunmehr der Fall auftreten, dass der ausgewählte Parameter des technischen Systems eine Zustandsgröße ist, die nicht über die ersten Messgrößen bestimmbar ist. In diesem Falle wird zunächst eine zweite Messgröße ermittelt, deren Wert eine Zustandsgröße ist und welche zu dem Messpark hinzuzufügen ist, damit der ausgewählte Parameter eindeutig bestimmbar ist. Das Verfahren, bei dem dieser Fall berücksichtigt ist, zeichnet sich dadurch aus, dass:

- wenigstens einer der ausgewählten Parameter eine ausgewählte Zustandsgröße ist, die nicht über die ersten Messgrößen bestimmbar ist;
- eine Matrix $P$, welche die orthogonale Projektion auf den Nullraum von $A$ ist, bestimmt wird;
- eine zweite Messgröße ermittelt wird, deren Wert eine Zustandsgröße $x_k$ ist und welche zu dem Messpark hinzuzufügen ist, damit die ausgewählte Zustandsgröße eindeutig bestimmbar ist;
- eine der zweiten Sensitivitätsgrößen die Varianz $\sigma_{k->xl}^2$ der ausgewählten Zustandsgröße bei Hinzunahme der ermittelten zweiten Messgröße $x_k$ mit der Varianz $\sigma_k$ zu dem Messpark darstellt;
- die zweite Sensitivitätsgröße durch folgende Formel bestimmt wird:

$$\sigma_{k\to x_l}^2 = \sigma_k^2 \cdot \frac{\|p\|^2}{\|p_k\|^2} + \left\| m_l - \frac{\|p\|}{\|p_k\|} m_k \right\|^2,$$

mit $p = Pn_1$, wobei $n_1$ die $l$-te Spalte der Matrix $N^T$ ist und $m_i$ die $i$-te Spalte der Matrix $M^T \cdot N$ ist und $p_k$ die $k$-te Spalte der Matrix $P \cdot N^T$ ist.

Es kann ferner der Fall auftreten, dass der ausgewählte Parameter eine Diagnosegröße ist, die nicht über die erste Messgröße bestimmbar ist. In diesem Fall wird zunächst eine zweite Messgröße ermittelt, deren Wert eine Zustandsgröße ist und welche zu dem Messpark hinzuzufügen ist, damit die ausgewählte Diagnosegröße eindeutig bestimmbar ist. Das Verfahren, bei dem dieser Fall berücksichtigt ist, zeichnet sich dadurch aus, dass:

- wenigstens einer der ausgewählten Parameter eine ausgewählte Diagnosegröße ist, die nicht über die ersten Messgrößen bestimmbar ist;
- eine Matrix Dd, welche die Jakobimatrix der Diagnosegrößen $d_i=d_i (x)$ ist, bestimmt wird;
- eine Matrix $P$, welche die orthogonale Projektion auf den Nullraum von $A$ ist, bestimmt wird;
- eine zweite Messgrößen ermittelt wird, deren Wert eine Zustandsgröße $x_k$ ist und welche zu dem Messpark hinzuzufügen ist, damit die ausgewählte Diagnosegröße eindeutig bestimmbar ist;
- eine der zweien Sensitivitätsgrößen die Varianz $\sigma_{k->dn}^2$ der ausgewählten Diagnosegröße $d_n$ bei Hinzunahme der ermittelten zweiten Messgröße $x_k$ mit der Varianz $\sigma_k$ zu dem Messpark darstellt;
- die zweite Sensitivitätsgröße durch folgende Formel bestimmt wird:

$$\sigma^2_{k\to d_n} = \sigma^2_k \cdot \frac{\| p \|^2}{\| p_k \|^2} + \left\| M^T \cdot c_n - \frac{\| p \|}{\| p_k \|} m_k \right\|^2 ,$$

mit $p = Pc_n$, wobei $c_n$ die $n$-te Spalte der Matrix $N^T \cdot Dd^T$, $m_k$ die $k$-te Spalte der Matrix $M^T \cdot N$ ist und $p_k$ die $k$-te Spalte der Matrix $P \cdot N^T$ ist.

Bei den beiden zuletzt genannten Ausführungsformen läuft die Ermittlung der zweiten.Messgröße vorzugsweise derart ab, dass in der Matrix P·N^T die Spalte gesucht wird, so dass $p$ linear abhängig von dem durch diese Spalte dargestellten Vektor ist, wobei der Index der Spalte angibt, welcher zweite Messwert zu dem Messpark hinzuzufügen ist.
In einer besonderes bevorzugten Ausgestaltung der Erfindung werden bei den Ausführungsformen, bei denen als zweite Sensitivitätsgrößen die Varianzen von ausgewählten Parametern bei der Hinzunahme von zweiten Messgrößen bestimmt werden, als Standardabweichung für die zweiten hinzuzunehmenden Messgrößen 1% des Wertes der zweiten Messgröße angenommen.
Es sei an dieser Stelle angemerkt, dass mathematisch die Richtigkeit aller im vorangegangenen verwendeten Formeln bewiesen werden kann.
Neben dem oben beschriebenen Verfahren betrifft die Erfindung auch eine Vorrichtung zur Durchführung des erfindungsgemäßen Verfahrens. Darüber hinaus umfasst die Erfindung ein Computerprogrammprodukt, welches ein Speichermedium aufweist, auf welchem ein Computerprogramm gespeichert ist, das auf einem Rechner ablaufbar ist und mit dem das erfindungsgemäße Verfahren durchführbar ist.
Ausführungsbeispiele der Erfindung werden nachfolgend anhand der Zeichnungen dargestellt und erläutert.
Es zeigt:

Fig.1 den schematischen Aufbau eines technischen Systems, das mittels des erfindungsgemäßen Verfahrens analysiert wird.

Fig. 2 eine Prozessoreinheit zur Durchführung des erfindungsgemäßen Verfahrens.

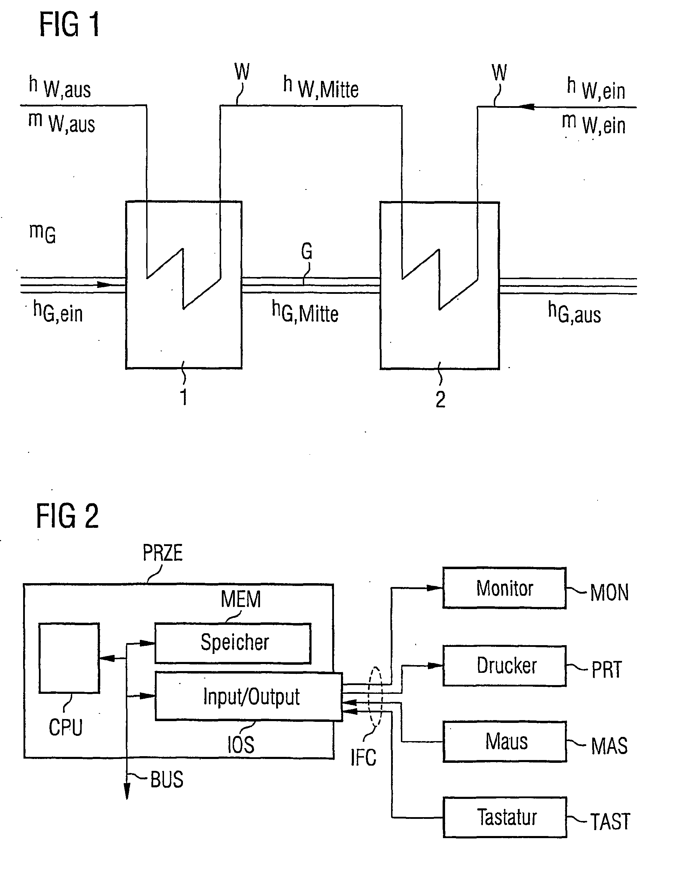

Das in Fig. 1 gezeigte technische System betrifft ein Heizsystem eines Kraftwerks mit zwei hintereinander geschalteten Heizflächen 1 und 2, wobei an diesen Heizflächen ein Gasstrom G und ein Wasserstrom W in jeweils entgegengesetzten Richtungen vorbeiströmen.
Das technische System wird durch folgende Zustandsgrößen charakterisiert:

$m_{W,ein}$     Massenfluss des Wassers beim Eintritt in das Heizsystem;

$m_{W,aus}$     Massenfluss des Wassers beim Austritt aus dem Heizsystem;

$h_{W,ein}$     spezifische Enthalpie des Wassers beim Eintritt in das Heizsystem;

$h_{W,Mitte}$     spezifische Enthalpie des Wassers zwischen den beiden Heizflächen 1 und 2;

$h_{W,aus}$     spezifische Enthalpie beim Austritt des Wassers aus dem Heizsystem;

$m_G$     Massenfluss des Gases im Heizsystem;

$h_{G,ein}$      spezifische Enthalpie des Gases beim Eintritt in das Heizsystem;

$h_{G,Mitte}$      spezifische Enthalpie des Gases zwischen den beiden Heizflächen 1 und 2;

$h_{G,aus}$      spezifischen Enthalpie des Gases beim Austritt aus dem Heizsystem.

Die Zustandsgrößen sind Variablen eines Gleichungssystems $H(x)=0$, welches folgende physikalischen Bilanzgleichungen umfasst:

Massenbilanz des Wassers im Heizsystem:

$$m_{W,ein} - m_{W,aus} = 0 \; ;$$

Enthalpiebilanz an der ersten Heizfläche:

$$m_G \cdot \left(h_{G,ein} - h_{G,Mitte}\right) - m_{W,aus} \cdot \left(h_{W,aus} - h_{W,Mitte}\right) = 0;$$

Enthalpiebilanz an der zweiten Heizfläche:

$$m_G \cdot \left(h_{G,Mitte} - h_{G,aus}\right) - m_{W,ein} \cdot \left(h_{W,Mitte} - h_{W,ein}\right) = 0 \; .$$

Es wird folgender Soll-Arbeitspunkt des technischen Systems betrachtet, wobei die nachfolgenden Werte der Zustandsgrößen eine Lösung des obigen Gleichungssystems darstellen:

| $m_{W,ein}$ | $m_{W,aus}$ | $h_{W,ein}$ | $h_{W,Mitte}$ | $h_{W,aus}$ | $m_G$ | $h_{G,ein}$ | $h_{G,Mitte}$ | $h_{G,aus}$ |
|---|---|---|---|---|---|---|---|---|
| 100 | 100 | 200 | 300 | 400 | 50 | 1000 | 800 | 600 |

Neben den oben genannten Zustandsgrößen ist das technische System ferner durch einen Diagnosewert charakterisiert, der im vorliegenden Fall den relativen Wärmeübertrag des durchströmenden Gases darstellt. Der Wärmeübertrag $W$ kann durch folgende Formel beschrieben werden:

$$W = \frac{h_{G,ein} - h_{G,aus}}{h_{G,ein}}$$

Folgende erste Messgrößen werden in dem technischen System mit einer Standardabweichung von jeweils 1% bezüglich des jeweiligen Soll-Wertes gemessen:

Enthalpiefluss des Wassers beim Eintritt in das Heizsystem:

$$m_{W,ein} \cdot h_{W,ein} \; ;$$

Massenfluss des Wassers beim Eintritt in das Heizsystem:

$$m_{W,ein} \; ;$$

Enthalpiefluss des Wassers beim Austritt aus dem Heizsystem:

$$m_{W,aus} \cdot h_{W,aus} \; ;$$

Massenfluss des Gases :

$$m_G \; ;$$

Enthalpiefluss des Gases beim Eintritt in das Heizsystem:

$$m_G \cdot h_{G,ein} \cdot$$

Mit der oben genannten Formel für den relativen Wärmeübertrag $W$ ergibt sich mit den Sollwerten $W$ =0,4 .

Aufgrund der verwendeten Standardabweichungen von 1% führt die Messung des relativen Wärmeübertrags zu einem Messwert von 0,4 mit einer Standardabweichung von 0,0098.
In einer ersten Variante des erfindungsgemäßen Verfahrens wird als Sensitivitätsgröße eines ersten Messwerts jeweils das Verhältnis der Genauigkeitsänderung des Diagnosewertes $W$ zu der Genauigkeitsänderung des ersten Messwertes bestimmt.
Es ergeben sich folgende Werte:

Sensitivitätsgröße des Enthalpieflusses des Wassers beim Eintritt in das Heizsystem: 0,167.

Sensitivitätsgröße des Massenflusses des Wassers bein Eintritt in das Heizsystem: 0,0.

Sensitivitätsgröße des Enthalpieflusses des Wassers beim Austritt aus dem Heizsystem: 0,667.

Sensitivitätsgröße des Massenflusses des Gases : 0,0;

Sensitivitätsgröße des Enthalpieflusses des Gases beim Eintritt in das Heizsystem: 0,167.

Man erkennt, dass die Sensitivitätsgröße des Enthalpieflusses des Wassers beim Austritt aus dem Heizsystem den größten Wert aufweist. Das bedeutet, dass eine Änderung der Genauigkeit der Messung des Enthalpieflusses des Wassers beim Austritt aus dem Heizsystem den größten Einfluss auf die Genauigkeit der Messung des relativen Wärmeübertrags hat. Folglich führt eine Verbesserung der Messgenauigkeit des Enthalpieflusses des Wassers beim Austritt aus dem Heizsystem am wirkungsvollsten zu einer Verbesserung der Genauigkeit des Diagnosewertes. Demgegenüber haben die Messungen der Massenflüsse einen Sensitivitätswert von 0 und deshalb keine Auswirkungen auf die Genauigkeit des Diagnosewertes $W$ .
In einer weiteren Ausführungsform des erfindungsgemäßen Verfahrens werden als Sensitivitätsgrößen die Varianzen des relativen Wärmeübertrags unter der Annahme berechnet, dass im technischen System eine Zustandsgröße zu den ersten Messgrößen als zweite Messgröße mit einer Standardabweichung von 1 % bezüglich des Sollwertes hinzugenommen wird. Im Folgenden sind die Standardabweichungen (Wurzeln aus den Varianzen) bei der Hinzunahme der einzelnen Zustandsgrößen angegeben:

Hinzunahme von $m_{W,ein}$ : 0,0098:

Hinzunahme von $m_{W,aus}$: 0,0098;

Hinzunahme von $h_{W,ein}$ : 0,0095;

Hinzunahme von $h_{W,aus}$: 0,0086;

Hinzunahme von $m_G$: 0,0098;

Hinzunahme von $h_{G,ein}$ : 0,0095;

Hinzunahme von $h_{G,aus}$ 0,0062.

Eine Hinzunahme von $h_{W,Mitte}$ und $h_{G,Mitte}$ wird nicht betrachtet, da diese Zustandsgrößen durch die Messgrößen nicht eindeutig bestimmt sind. Es ist ersichtlich, dass die Einführung der Messung von $h_{G,aus}$ die kleinste Standardabweichung für den relativen Wärmeübertrag ergibt. Folglich wird die Messung von $h_{G,aus}$ zu dem Messpark der ersten Messungen hinzugenommen.

In einer weiteren Ausführungsform der Erfindung werden nunmehr Zustandsgrößen betrachtet, die nicht eindeutig durch die ersten Messgrößen des technischen Systems bestimmt sind. Es handelt sich hierbei um die Zustandsgrößen $h_{W,Mitte}$ und $h_{G,Mitte}$. Es wird nunmehr in einem ersten Schritt ermittelt, welche Messgröße hinzugenommen werden muss, damit die Zustandsgrößen $h_{W,Mitte}$ und $h_{G,Mitte}$ eindeutig bestimmt sind. Hierzu wird eine Rechnung gemäß Anspruch 11 durchgeführt.

Es ergibt sich, dass eine Messung von $h_{W,Mitte}$ oder eine Messung von $h_{G,Mitte}$ schon jeweils beide Zustandsgrößen $h_{W,Mitte}$ und $h_{G,Mitte}$ festlegen. Bei der Annahme einer Standardabweichung von 1 % für die Messung von $h_{W,Mitte}$ bzw. $h_{G,Mitte}$ ergibt sich:

- bei der Messung von $h_{W,Mitte}$ eine Standardabweichung für $h_{W,Mitte}$ von 3,0 und eine Standardabweichung für $h_{G,Mitte}$ von 17,34;
- bei der Messung von $h_{G,Mitte}$ eine Standardabweichung für $h_{W,Mitte}$ von 9, 06 und eine Standardabweichung von $h_{G,Mitte}$ 8,0.

Hieraus ist ersichtlich, dass zur genauen Bestimmung von $h_{W,Mitte}$ bevorzugt auch $h_{W,Mitte}$ gemessen wird, wohingegen zu einer genauen Bestimmung von $h_{G,Mitte}$ bevorzugt auch $h_{G,Mitte}$ als Messung zum Messpark hinzugenommen wird.

Das oben beschriebene Verfahren ermöglicht eine systematische und schnelle Suche nach neuen Mess-Stellen, durch welche die Genauigkeit von ausgewählten Zustandsgrößen bzw. Diagnosegrößen verbessert werden kann. Es muss somit nicht mehr auf die Erfahrung von Ingenieuren zurückgegriffen werden, um zu entscheiden, welche Messgrößen zu einem Messpark hinzugenommen werden sollen bzw. welche Messgenauigkeiten bevorzugt verbessert werden sollten.

In Fig. 2 ist eine Prozessoreinheit PRZE zur Durchführung des erfindungsgemäßen Verfahrens dargestellt. Die Prozessoreinheit PRZE umfasst einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

**Patentansprüche**

1. Verfahren zum Entwurf eines technischen Systems, das durch Parameter umfassend Zustandsgrößen und von den Zustandsgrößen abhängige Diagnosegrößen charakterisiert ist, bei dem das technische System durch ein Gleichungssystem beschrieben wird, wobei die Zustandsgrößen Lösungen des Gleichungssystems sind; **gekennzeichnet durch** folgende Schritte:

   - ein Messpark umfassend erste Messgrößen wird analysiert, wobei die ersten Messgrößen mit vorgegebenen Genauigkeiten im technischen System gemessen werden und von den Zustandsgrößen abhängen;
   - zweite, von den Zustandsgrößen abhängige messgrößen sind im technischen System mit einer vorbestimmten Genauigkeit messbar ;
   - erste Sensivitätsgrößen für die ersten Messgrößen und zweite Sensivitätsgrößen für die zweiten Messgrößen werden bestimmt;

- wobei zur Bestimmung der ersten Sensitivitätsgrößen ermittelt wird, in welchem Maße eine Änderung der Genauigkeit der Messung der ersten Messgrößen wenigstens einen ausgewählten Parameter beeinflusst, und zur Bestimmung der zweiten Sensitivitätsgrößen ermittelt wird, in welchem Maße die Messung der zweiten Messgrößen wenigstens einen ausgewählten Parameter beeinflusst;
- der Messpark wird in Abhängigkeit von den ersten und zweiten Sensitivitätsgrößen derart verändert, dass die Genauigkeit einer oder mehrerer erster Messgrößen verändert wird und/oder eine oder mehrere erste Messgrößen aus dem Messpark herausgenommen werden und/oder eine oder mehrere zweite Messgrößen zum Messpark hinzugenommen werden;
- der veränderte Messpark wird zum Entwurf des technischen Systems eingesetzt.

2. Verfahren nach Anspruch 1, bei dem die Genauigkeit einer ersten Messgröße erhöht wird, wenn die erste Sensitivitätsgröße dieser Messgröße in einem vorbestimmten Wertebereich liegt, und/oder eine erste Messgröße aus dem Messpark herausgenommen wird, wenn die erste Sensitivitätsgröße dieser Messgröße in einem vorbestimmten Wertebereich liegt, und/oder eine zweite Messgröße zum Messpark hinzugenommen wird, wenn die zweite Sensitivitätsgröße dieser Messgröße in einem vorbestimmten Wertebereich liegt.

3. Verfahren nach Anspruch 1 oder 2, bei dem das technische System durch ein Gleichungssystem $H(x) = (H_1(x), ...., H_m(x)) = 0$ beschrieben wird, wobei $x=(x_1,...,x_n)$ ein Vektor ist, der als Komponenten die Zustandsgrößen $x_i$ umfasst.

4. Verfahren nach Anspruch 3, bei dem die folgenden Matrizen berechnet werden:

- eine Matrix $N$, die den Nullraum der Jakobimatrix von $H$ aufspannt,
- eine Matrix $W$, so dass $W^T \cdot W$ die Inverse der Kovarianzmatrix der ersten Messgrößen $y_i=b_i(x)$ ist, wobei die Kovarianzmatrix als Einträge die Kovarianzen $\sigma_{ij}^2 = E((y_i - E(y_i))(y_j - E(y_j)))$ aufweist, wobei $E(y)$ der Erwartungswert von y ist;
- eine Matrix M, welche die pseudoinverse Matrix zu $A=W \cdot Db \cdot N$ ist, wobei $Db$ die Jakobimatrix der ersten Messgrößen $y_i=b_i(x)$ ist.

5. Verfahren nach Anspruch 4, bei dem

- wenigstens einer der ausgewählten Parameter eine ausgewählte Zustandsgröße ist, die über die ersten Messgrößen bestimmbar ist;
- eine oder mehrere der ersten Sensitivitätsgrößen $\Phi_{y_jx_l}$ jeweils das Verhältnis der Genauigkeitsänderung $\Delta\sigma_{11}^2/x_l = \Delta E((x_1 - E(x_1))^2)/x_1$ der ausgewählten Zustandsgröße $x_1$ zu der Genauigkeitsänderung $\Delta\sigma_{jj}^2/y_j = \Delta E((y_j - E(y_j))^2)y_j$ einer ersten Messgröße $y_j$ darstellen;
- die ersten Sensitivitätsgrößen durch folgende Formel bestimmt werden:

$$\Phi_{y_j x_l} = \frac{\sigma_{jj}^2}{\sigma_{ll}^2} \cdot r_{lj}^2$$

wobei $r_{lj}$ das Element in der 1-ten Zeile und j-ten Spalte der Matrix $N \cdot M \cdot W$ ist.

6. Verfahren nach Anspruch 4 oder 5, bei dem

- wenigstens einer der ausgewählten Parameter eine ausgewählte Diagnosegröße ist, die über die ersten Messgrößen bestimmbar ist;
- eine Matrix Dd, welche die Jakobimatrix der Diagnosegrößen $d_i=d_i(x)$ ist, bestimmt wird;
- eine oder mehrere der ersten Sensitivitätsgrößen $\Phi_{y_j d_n}$ jeweils das Verhältnis der Genauigkeitsänderung $\Delta\sigma_{nn}^2/d_n = \Delta E((d_n - E(d_n))^2)/d_n$ der ausgewählten Diagnosegröße $d_n$ zu der Genauigkeitsänderung $\Delta\sigma_{jj}^2/y_j = \Delta E((y_j - E(y_j))^2)/y_j$ einer ersten Messgröße $y_j$ darstellen;
- die ersten Sensitivitätsgrößen durch folgende Formel bestimmt werden:

$$\Phi_{y_j d_n} = \frac{\sigma_{jj}^2}{\sigma_{nn}^2} \cdot s_{nj}^2$$

wobei $s_{nj}$ das Element in der $n$-ten Zeile und $j$-ten Spalte von $Dd \cdot N \cdot M \cdot W$ ist.

**7.** Verfahren nach einem der Ansprüche 4 bis 6, bei dem

- wenigstens einer der ausgewählten Parameter eine ausgewählte Zustandsgröße ist, die über die ersten Messgrößen bestimmbar ist;
- eine oder mehrere der zweiten Sensitivitätsgrößen jeweils die Varianz $\sigma_{k\text{->}xl}^2$ der ausgewählten Zustandsgröße $x_1$ bei Hinzunahme einer zweiten Messgröße, deren Wert eine Zustandsgröße $x_k$ ist, mit der Varianz $\sigma_k$ zu dem Messpark darstellen;
- die zweiten Sensitivitätsgrößen durch folgende Formel bestimmt werden:

$$\sigma_{k \to x_l}^2 = m_l^T \cdot m_l - \frac{\left(m_k^T \cdot m_l\right)^2}{\sigma_k^2 + m_k^T \cdot m_k},$$

wobei $m_i$ die i-te Spalte der Matrix $M^{T \cdot} N$ ist.

**8.** Verfahren nach einem der Ansprüche 4 bis 7, bei dem

- wenigstens einer der ausgewählten Parameter eine ausgewählte Diagnosegröße ist, die über die ersten Messgrößen bestimmbar ist;
- eine Matrix Dd, welche die Jakobimatrix der Diagnosegrößen $d_i = d_i(x)$ ist, bestimmt wird;
- eine oder mehrere der zweiten Sensitivitätsgrößen jeweils die Varianz $\sigma_{k\text{->}dn}^2$ der ausgewählten Diagnosegröße $d_n$ bei Hinzunahme einer zweiten Messgröße, deren Wert eine Zustandsgröße $x_k$ ist, mit der Varianz $\sigma_k$ zu dem Messpark darstellen;
- die zweiten Sensitivitätsgrößen durch folgende Formel bestimmt werden:

$$\sigma_{k \to d_n}^2 = q_n^T \cdot q_n - \frac{\left(m_k^T \cdot q_n\right)^2}{\sigma_k^2 + m_k^T \cdot m_k}$$

wobei $m_i$ die $i$-te Spalte der Matrix $M^{T \cdot} N^T$ und $q_n$ die $n$-te Spalte der Matrix $M^{T \cdot} N^{T \cdot} Dd^T$ ist.

**9.** Verfahren nach einem der Ansprüche 4 bis 8, bei dem

- wenigstens einer der ausgewählten Parameter eine ausgewählte Zustandsgröße ist, die nicht über die ersten Messgrößen bestimmbar ist;
- eine Matrix $P$, welche die orthogonale Projektion auf den Nullraum von $A$ ist, bestimmt wird;
- eine zweite Messgröße ermittelt wird, deren Wert eine Zustandsgröße $x_k$ ist und welche zu dem Messpark hinzuzufügen ist, damit die ausgewählte Zustandsgröße eindeutig bestimmbar ist;
- eine der zweiten Sensitivitätsgrößen die Varianz $\sigma_{k\text{->}xl}^2$ der ausgewählten Zustandsgröße bei Hinzunahme der ermittelten zweiten Messgröße $x_k$ mit der Varianz $\sigma_k$ zu dem Messpark darstellt;
- die zweite Sensitivitätsgröße durch folgende Formel bestimmt wird:

$$\sigma_{k \to x_l}^2 = \sigma_k^2 \cdot \frac{\| p \|^2}{\| p_k \|^2} + \left\| m_l - \frac{\| p \|}{\| p_k \|} m_k \right\|^2,$$

mit $p = Pn_1$, wobei $n_1$ die 1-te Spalte der Matrix $N^T$ ist und $m_i$ die $i$-te Spalte der Matrix $M^T \cdot N^T$ ist und $p_k$ die $k$-te Spalte der Matrix $P \cdot N^T$ ist.

**10.** Verfahren nach einem der Ansprüche 4 bis 9, bei dem

- wenigstens einer der ausgewählten Parameter eine ausgewählte Diagnosegröße ist, die nicht über die ersten Messgrößen bestimmbar ist;
- eine Matrix Dd, welche die Jakobimatrix der Diagnosegrößen $d_i = d_i(x)$ ist, bestimmt wird;
- eine Matrix $P$, welche die orthogonale Projektion auf den Nullraum von $A$ ist, bestimmt wird;
- eine zweite Messgrößen ermittelt wird, deren Wert eine Zustandsgröße $x_k$ ist und welche zu dem Messpark hinzuzufügen ist, damit die ausgewählte Diagnosegröße eindeutig bestimmbar ist;
- eine der zweiten Sensitivitätsgrößen die Varianz $\sigma_{k->dn}^2$ der ausgewählten Diagnosegröße $d_n$ bei Hinzunahme der ermittelten zweiten Messgröße $x_k$ mit der Varianz $\sigma_k$ zu dem Messpark darstellt;
- die zweite Sensitivitätsgröße durch folgende Formel bestimmt wird:

$$\sigma_{k \to d_n}^2 = \sigma_k^2 \cdot \frac{\| p \|^2}{\| p_k \|^2} + \left\| M^T \cdot c_n - \frac{\| p \|}{\| p_k \|} m_k \right\|^2,$$

mit $p = Pc_n$, wobei $c_n$ die n-te Spalte der Matrix $N^T \cdot Dd^T$, $m_k$ die $k$-te Spalte der Matrix $M^T \cdot N^T$ ist und $p_k$ die $k$-te Spalte der Matrix $P \cdot N^T$ ist.

**11.** Verfahren nach Anspruch 9 oder 10, bei dem in der Matrix $P \cdot N^T$ die Spalte gesucht wird, sodass $p$ von dieser Spalte linear abhängt, wobei der Index k dieser Spalte angibt, dass der zweite Messwert $x_k$ zum Messpark hinzuzunehmen ist, damit der ausgewählte Parameter eindeutig bestimmbar ist.

**12.** Verfahren nach einem der Ansprüche 7 bis 11, bei dem die Standardabweichung $\sigma_k$ der zweiten Messgröße 1% des Wertes der zweiten Messgröße ist.

**13.** Datenverarbeitungseinheit zur Analyse eines technischen Systems mit Codemitteln zur Durchführung eines Verfahrens nach einem der Ansprüche 1 bis 12.

**14.** Computerprogrammprodukt, welches ein Speichermedium aufweist, auf welchem ein Computerprogramm gespeichert ist, welches, wenn es auf einem Rechner ausgeführt wird, der Rechner das Verfahren nach einem der Ansprüche 1 bis 12 durchführt.

**Claims**

**1.** Method for designing a technical system which is **characterised by** parameters, including state variables and diagnostic variables which depend on the state variables, in which the technical system is specified by a system of equations, with the state variables being the solutions of the system of equations; **characterised by** the following steps:

- a measurement park, incorporating first measured variables, is analysed, whereby the first measured variables are measured in the technical system with a prescribed accuracy, and depend on the state variables;
- second measured variables, which depend on the state variables, can be measured in the technical system with a predetermined accuracy;
- first sensitivity variables are determined for the first measured variables and/or second sensitivity variables for the second measured variables;
- in which, to determine the first sensitivity variables, a determination is made of the magnitude of the influence which a change in the accuracy of measurement of the first measured variables has on at least one selected parameter, and to determine the second sensitivity variables, a determination is made of the magnitude of the influence which the measurement of the second measured variables has on at least one selected parameter;
- the measurement park is changed, depending on the first and/or second sensitivity variables, in such a way that the accuracy of one or more of the first measured variables is changed and/or one or more of the first measured variables is taken out of the measurement park and/or one or more of the second measured variables is added into the measurement park;
- the amended measurement park is used in designing the technical system.

2. Method in accordance with claim 1, whereby the accuracy of a first measured variable is increased if the first sensitivity variable for this measured variable lies within a predefined value range and/or a first measured variable is taken out of the measurement park if the first sensitivity variable for this measured variable lies within a predefined value range and/or a second measured variable is added into the measurement park if the second sensitivity variable for this measured variable lies within a predefined value range.

3. Method in accordance with claim 1 or 2, whereby the technical system is described by a system of equations $H(x) = (H_1(x), ... , H_m(x)) = 0$, where $x = (x_1, ..., x_n)$ is a vector in which the components are the state variables $x_i$.

4. Method in accordance with claim 3, in which the following matrices are calculated:

   - a matrix $N$, which spans the null space of the Jacobian matrix of $H$,
   - a matrix $W$, such that $W^T \cdot W$ is the inverse of the covariance matrix of the first measured variables $y_i = b_i(x)$, where the entries in the covariance matrix are the covariances $\sigma_{ij}^2 = E((y_i - E(y_i))(y_j - E(y_j)))$, where $E(y)$ is the expected value of y;
   - a matrix M which is the pseudoinverse matrix of $A = W \cdot Db \cdot N$, where $Db$ is the Jacobian matrix of the first measured variables $y_i = b_i(x)$.

5. Method in accordance with claim 4, in which

   - at least one of the selected parameters is a selected state variable which can be determined via the first measured variables;
   - one or more of the first sensitivity variables $\Phi_{y_j x_l}$ represents in each case the ratio of the change in accuracy $\Delta\sigma_{11}^2/x_1 = \Delta E((x_1 - E(x_1))^2)/x_1$ of the selected state variable $x_1$ to the change in accuracy $\Delta\sigma_{jj}^2/y_j = \Delta E((y_j - E(y_j))^2)/y_j$ of a first measured variable $y_j$;
   - the first sensitivity variables are determined from the following formula:

$$\Phi_{y_j x_l} = \frac{\sigma_{jj}^2}{\sigma_{11}^2} \cdot r_{1j}^2$$

where $r_{lj}$ is the element in the l$^{th}$ line and the j$^{th}$ column of the matrix $N \cdot M \cdot W$.

6. Method in accordance with claim 4 or 5, in which

   - at least one of the selected parameters is a selected diagnostic variable which can be determined via the first measured variables;
   - a matrix Dd is determined, this being the Jacobian matrix of the diagnostic variables $d_i = d_i(x)$;
   - one or more of the first sensitivity variables $\Phi_{y_j d_n}$ represents in each case the ratio of the change in accuracy $\Delta\sigma_{nn}^2/d_n = \Delta E((d_n - E(d_n))^2)/d_n$ of the selected diagnostic variable $d_n$ to the change in accuracy $\Delta\sigma_{jj}^2/y_j = \Delta E((y_j - E(y_j))^2)/y_j$ of a first measured variable $y_j$;
   - the first sensitivity variables are determined by the following formula:

$$\Phi_{y_j d_n} = \frac{\sigma_{jj}^2}{\sigma_{nn}^2} \cdot s_{nj}^2$$

where $s_{nj}$ is the element in the n$^{th}$ line and the j$^{th}$ column of $Dd \cdot N \cdot M \cdot W$.

7. Method in accordance with one of the claims 4 to 6, in which

- at least one of the selected parameters is a selected state variable which can be determined via the first measured variables;
- one or more of the second sensitivity variables represents, in each case, the variance $\sigma_{k\text{-}>xl}{}^2$ of the selected state variable $x_1$ when a second measured variable, the value of which is a state variable $x_k$ with the variance $\sigma_k$, is being added to the measurement park;
- the second sensitivity variables are determined by the following formula:

$$\sigma^2_{k\text{->}xl} = m_l{}^T \cdot m_l - \frac{(m_k{}^T \cdot m_l)^2}{\sigma_k{}^2 + m_k{}^T \cdot m_k},$$

where $m_i$ is the $i^{\text{th}}$ column of the matrix $M^T \cdot N$.

8. Method in accordance with one of the claims 4 to 7, in which

- at least one of the selected parameters is a selected diagnostic variable which can be determined via the first measured variables;
- a matrix Dd, which is the Jacobian matrix of the diagnostic variables $d_i = d_i(x)$, is determined;
- one or more of the second sensitivity variables represents, in each case, the variance $\sigma_{k\text{-}>dn}{}^2$ of the selected diagnostic variable $d_n$ when a second measured variable, the value of which is a state variable $x_k$ which has a variance $\sigma_k$, is being added to the measurement park;
- the second sensitivity variables are determined by the following formula:

$$\sigma^2_{k\text{->}dn} = q_n{}^T \cdot q_n - \frac{(m_k{}^T \cdot q_n)^2}{\sigma^2_k + m_k{}^T \cdot m_k}$$

where $m_i$ is the $i^{\text{th}}$ column of the matrix $M^T \cdot N^T$, and $q_n$ is the $n^{\text{th}}$ column of the matrix and $M^T \cdot N^T \cdot Dd^T$.

9. Method in accordance with one of the claims 4 to 8, in which

- at least one of the selected parameters is a selected state variable which cannot be determined via the first measured variables;
- a matrix $P$, which is the orthogonal projection onto the null space of $A$, is determined;
- a second measured variable is determined, the value of which is a state variable $x_k$, and which is to be added into the measurement park so that the selected state variable can be uniquely determined;
- one of the second sensitivity variables represents the variance $\sigma_{k\text{-}>xl}{}^2$ of the selected state variable when the second measured variable $x_k$ which has been determined, and which has the variance $\sigma_k$, is being added to the measurement park;
- the second sensitivity variable is determined by the following formula:

$$\sigma^2_{k\text{->}xl} = \sigma^2_k \cdot \frac{\|p\|^2}{\|p_k\|^2} + \left\| m_l - \frac{\|p\|}{\|p_k\|} m_k \right\|^2,$$

with $p = Pn_1$, where $n_1$ is the lth column of the matrix $N^T$, and $m_i$ is the ith column of the matrix $M^T \cdot N^T$ and $p_k$ is the kth column of the matrix $P \cdot N^T$.

10. Method in accordance with one of the claims 4 to 9, in which

- at least one of the selected parameters is a selected diagnostic variable which cannot be determined via the first measured variables;
- a matrix Dd, which is the Jacobian matrix of the diagnostic variables $d_i = d_i(x)$, is determined;
- a matrix P, which is the orthogonal projection onto the null space of A, is determined;
- a second measured variable is determined, the value of which is a state variable $x_k$, and which is to be added into the measurement park so that the selected state variable can be uniquely determined;
- one of the second sensitivity variables represents the variance $\sigma_{k->dn}{}^2$ of the selected diagnostic variable $d_n$ when the second measured variable $x_k$ which has been determined, and which has the variance $\sigma_k$, is being added into the measurement park;
- the second sensitivity variable is determined by the following formula:

$$\sigma^2_{k->dn} = \sigma^2_k \cdot \frac{\|p\|^2}{\|p_k\|^2} + \left\| M^T \cdot c_n - \frac{\|p\|}{\|p_k\|} m_k \right\|^2 ,$$

with $p = Pc_n$, where $c_n$ is the nth column of the matrix $N^T \cdot Dd^T$, $m_k$ is the kth column of the matrix $M^T \cdot N^T$ and $p_k$ is the kth column of the matrix $P \cdot N^T$.

11. Method in accordance with claim 9 or 10, in which the matrix $P \cdot N^T$ is searched for the column such that $p$ is a linear function of this column, where the index k of this column specifies that the second measurement value $x_k$ is to be added into the measurement park so that the selected parameter can be uniquely determined.

12. Method in accordance with one of the claims 7 to 11, in which the standard deviation $\sigma_k$ of the second measured variable is 1% of the value of the second measured variable.

13. Data processing unit for analysing a technical system with code means for implementing a method according to one of claims 1 to 12..

14. Computer program product which has a storage medium on which is stored a computer program which, if it is executed on a computer, the computer implements the method according to one of claims 1 to 12.

**Revendications**

1. Procédé de conception d'un système technique qui est **caractérisé par** des paramètres comprenant des grandeurs d'état et des grandeurs de diagnostic qui dépendent des grandeurs d'état, dans lequel le système technique est décrit par un système d'équations, les grandeurs d'état étant des solutions du système d'équations, **caractérisé par** les étapes suivantes:

- analyse d'un parc de mesures comprenant de premières grandeurs de mesure, les premières grandeurs de mesure étant mesurées avec des précisions prédéfinies dans le système technique et dépendant des grandeurs d'état;
- des deuxièmes grandeurs de mesure qui dépendent des grandeurs d'état sont mesurables avec une précision prédéfinie dans le système technique;
- détermination de premières grandeurs de sensibilité pour les premières grandeurs de mesure et de deuxièmes grandeurs de sensibilité pour les deuxièmes grandeurs de mesure,
- tout en étant qu'il est établi, aux fins de la détermination des premières grandeurs de sensibilité, dans quelle mesure une modification de la précision de la mesure des premières grandeurs de mesure influence au moins un paramètre sélectionné et qu'il est établi, aux fins de la détermination des deuxièmes grandeurs de sensibilité, dans quelle mesure la mesure des deuxièmes grandeurs de mesure influence au moins un paramètre sélectionné;

- modification du parc de mesures en fonction des premières et deuxièmes grandeurs de sensibilité de manière telle que la précision d'une ou de plusieurs premières grandeurs de mesure est modifiée et/ou une ou plusieurs premières grandeurs de mesure sont retirées du parc de mesures et/ou une ou plusieurs deuxièmes grandeurs de mesure sont ajoutées au parc de mesures;

- mise en oeuvre, aux fins de la conception du système technique, du parc de mesures modifié.

2. Procédé selon la revendication 1, dans lequel la précision d'une première grandeur de mesure subit une augmentation lorsque la première grandeur de sensibilité de cette grandeur de mesure se trouve dans une plage de valeurs prédéterminée, et/ou une première grandeur de mesure est retirée du parc de mesures lorsque la première grandeur de sensibilité de cette grandeur de mesure se trouve dans une plage de valeurs prédéterminée, et/ou une deuxième grandeur de mesure est ajoutée au parc de mesures lorsque la deuxième grandeur de sensibilité de cette grandeur de mesure se trouve dans une plage de valeurs prédéterminée.

3. Procédé selon la revendication 1 ou 2, dans lequel le système technique est décrit par un système d'équations $H(x) = (H_1(x), ..., H_m(x)) = 0$, $x = (x_1, ..., x_n)$ étant un vecteur qui comprend, en tant que composantes, les grandeurs d'état $x_i$.

4. Procédé selon la revendication 3, dans lequel les matrices suivantes sont calculées:

- une matrice N qui couvre l'espace nul de la matrice de Jacobi de H,

- une matrice W de sorte que $W^T \cdot W$ est l'inverse de la matrice de covariance des premières grandeurs de mesure $y_i = b_i(x)$, la matrice de covariance présentant, en tant qu'entrées, les covariances $\sigma_{ij}^2 = E((y_i - E(y_i))(y_j - E(y_j)))$, $E(y)$ étant la valeur escomptée de y;

- une matrice M qui est la matrice pseudo-inverse de $A = W \cdot Db \cdot N$, Db étant la matrice Jacobienne des premières grandeurs de mesure $y_i = b_i(x)$.

5. Procédé selon la revendication 4, dans lequel

- au moins l'un des paramètres sélectionnés est une grandeur d'état sélectionnée qui peut être déterminée par l'intermédiaire des premières grandeurs de mesure;

- une ou plusieurs des premières grandeurs de sensibilité $\phi_{y_j x_l}$ représente respectivement le rapport entre la modification de la précision $\Delta\sigma_{11}^2 / x_l = \Delta E((x_l - E(x_l))^2)/x_l$ de la grandeur d'état $x_1$ sélectionnée et la modification de la précision $\Delta\sigma_{jj}^2/y_j = \Delta E((y_j - E(y_j))^2)/y_j$ d'une première grandeur de mesure $y_j$;

- les premières grandeurs de sensibilité sont déterminées par la formule suivante:

$$\Phi_{y_j x_l} = \frac{\sigma_{jj}^2}{\sigma_{ll}^2} \cdot r_{lj}^2$$

$r_{ij}$ étant l'élément de la $l^{ième}$ ligne et de la $j^{ième}$ colonne de la matrice $N \cdot M \cdot W$.

6. Procédé selon la revendication 4 ou 5, dans lequel

- au moins l'un des paramètres sélectionnés est une grandeur de diagnostic sélectionnée qui peut être déterminée par l'intermédiaire des premières grandeurs de mesure;

- une matrice Dd, qui est la matrice Jacobienne des grandeurs de diagnostic $d_i = d_i(x)$, est déterminée,

- une ou plusieurs des première grandeurs de sensibilité $\phi_{y_j d_n}$ représente respectivement le rapport entre la modification de la précision $\Delta\sigma_{nn}^2 / d_n = \Delta E((d_n - E(d_n))^2)/d_n$ de la grandeur de diagnostic $d_n$ sélectionnée et la modification de la précision $\Delta\sigma_{jj}^2/y_j = \Delta E((y_j E(y_j))^2)/y_j$ d'une première grandeur de mesure $y_j$;

- les premières grandeurs de sensibilité sont déterminées par la formule suivante:

$$\Phi_{y_j d_n} = \frac{\sigma_{jj}^2}{\sigma_{nn}^2} \cdot s_{nj}^2$$

$s_{nj}$ étant l'élément de la $n^{ième}$ ligne et de la $j^{ième}$ colonne de la matrice Dd·N·M·W.

**7.** Procédé selon l'une des revendications 4 à 6, dans lequel

- au moins l'un des paramètres sélectionnés est une grandeur d'état sélectionnée qui peut être déterminée par l'intermédiaire des premières grandeurs de mesure;
- une ou plusieurs des deuxièmes grandeurs de sensibilité représentent respectivement la variance $\sigma_{k\text{->xl}}2$ de la grandeur d'état sélectionnée $x_1$ lorsqu'une deuxième grandeur de mesure, dont la valeur est une grandeur d'état $x_k$, vient s'ajouter avec la variance $\sigma_k$ au parc de mesures,
- les deuxièmes grandeurs de sensibilité étant déterminées par la formule suivante:

$$\sigma_{k \to x_l}^2 = m_l^T \cdot m_l - \frac{\left(m_k^T \cdot m_l\right)^2}{\sigma_k^2 + m_k^T \cdot m_k},$$

$m_i$ étant la $i^{ième}$ colonne de la matrice $M^T \cdot N$.

**8.** Procédé selon l'une des revendications 4 à 7, dans lequel

- au moins l'un des paramètres sélectionnés est une grandeur de diagnostic sélectionnée qui peut être déterminée par l'intermédiaire des premières grandeurs de mesure;
- une matrice Dd, qui est la matrice Jacobienne des grandeurs de diagnostic $d_i = d_i(x)$, est déterminée,
- une ou plusieurs des deuxièmes grandeurs de sensibilité représentent respectivement la variance $\sigma_{k\text{->dn}}2$ de la grandeur de diagnostic sélectionnée $d_n$ lorsqu'une deuxième grandeur de mesure, dont la valeur est une grandeur d'état $x_k$, vient s'ajouter avec la variance $\sigma_k$ au parc de mesures,
- les deuxièmes grandeurs de sensibilité étant déterminées par la formule suivante:

$$\sigma_{k \to d_n}^2 = q_n^T \cdot q_n - \frac{\left(m_k^T \cdot q_n\right)^2}{\sigma_k^2 + m_k^T \cdot m_k}$$

$m_i$ étant la $i^{ième}$ colonne de la matrice $M^T \cdot N^T$ et $q_n$ étant la $n^{ième}$ colonne de la matrice $M^T \cdot N^T \cdot Dd^T$.

**9.** Procédé selon l'une des revendications 4 à 8, dans lequel

- au moins l'un des paramètres sélectionnés est une grandeur d'état sélectionnée qui ne peut pas être déterminée par l'intermédiaire des premières grandeurs de mesure;
- une matrice P, qui est la projection orthogonale sur l'espace nul de A, est déterminée,
- une deuxième grandeur de mesure est déterminée, dont la valeur est une grandeur d'état $x_k$ et qui doit être ajoutée au parc de mesures pour que la grandeur d'état sélectionnée puisse être déterminée univoquement,
- l'une des deuxièmes grandeurs de sensibilité représente la variance $\sigma_{k\text{->xl}}2$ de la grandeur d'état sélectionnée lorsque la deuxième grandeur de mesure déterminée $x_k$ vient s'ajouter avec la variance $\sigma_k$ au parc de mesures,
- la deuxième grandeur de sensibilité est déterminée par la formule suivante:

$$\sigma_{k \to x_l}^2 = \sigma_k^2 \cdot \frac{\|p\|^2}{\|p_k\|^2} + \left\| m_l - \frac{\|p\|}{\|p_k\|} m_k \right\|^2$$

avec p = Pn$_l$, n$_l$ étant la l$^{ième}$ colonne de la matrice N$^T$ et m$_i$ étant la i$^{ième}$ colonne de la matrice M$^T \cdot$ N$^T$ et p$_k$ étant la k$^{ième}$ colonne de la matrice P$\cdot$ N$^T$.

**10.** Procédé selon l'une des revendications 4 à 9, dans lequel

- au moins l'un des paramètres sélectionnés est une grandeur de diagnostic sélectionnée qui ne peut pas être déterminée par l'intermédiaire des premières grandeurs de mesure;
- une matrice Dd, qui est la matrice Jacobienne des grandeurs de diagnostic d$_i$ = d$_i$(x), est déterminée,
- une matrice P, qui est la projection orthogonale sur l'espace nul de A, est déterminée,
- une deuxième grandeur de mesure est déterminée, dont la valeur est une grandeur d'état x$_k$ et qui doit être ajoutée au parc de mesures pour que la grandeur de diagnostic sélectionnée puisse être déterminée univoquement,
- l'une des deuxièmes grandeurs de sensibilité représente la variance $\sigma_{k\text{->}dn}^2$ de la grandeur de diagnostic sélectionnée d$_n$ lorsque la deuxième grandeur de mesure déterminée x$_k$ vient s'ajouter avec la variance $\sigma_k$ au parc de mesures,
- la deuxième grandeur de sensibilité est déterminée par la formule suivante:

$$\sigma_{k \to d_n}^2 = \sigma_k^2 \cdot \frac{\|p\|^2}{\|p_k\|^2} + \left\| M^T \cdot c_n - \frac{\|p\|}{\|p_k\|} m_k \right\|^2$$

avec p = Pc$_n$, c$_n$ étant la n$^{ième}$ colonne de la matrice N$^T \cdot$ Dd$^T$, m$_k$ étant la k$^{ième}$ colonne de la matrice M$^T \cdot$ N$^T$ et p$_k$ étant la k$^{ième}$ colonne de la matrice P$\cdot$ N$^T$.

**11.** Procédé selon la revendication 9 ou 10, dans lequel la colonne est cherchée dans la matrice P $\cdot$ N$^T$ de sorte que p dépend linéairement de cette colonne, l'indice k de cette colonne indiquant que la deuxième valeur mesurée x$_k$ doit être ajoutée au parc de mesures pour que le paramètre sélectionné puisse être déterminé univoquement.

**12.** Procédé selon l'une des revendications 7 à 11, dans lequel l'écart type $\sigma_k$ de la deuxième grandeur de mesure est 1 % de la valeur de la deuxième grandeur de mesure.

**13.** Unité de traitement de données pour analyser un système technique avec des moyens de code permettant l'exécution d'un procédé selon l'une des revendications 1 à 12.

**14.** Produit de programme informatique qui comporte un support de mémoire sur lequel est stocké un programme informatique tel que, lorsqu'il est exécuté sur un ordinateur, l'ordinateur exécute le procédé selon l'une des revendications 1 à 12.

## FIG 1

$^h$W,aus
$^m$W,aus

W
$^h$W,Mitte

W
$^h$W,ein
$^m$W,ein

$^m$G

G

$^h$G,ein

$^h$G,Mitte

$^h$G,aus

1

2

## FIG 2

PRZE

MEM

Monitor — MON

Speicher

Drucker — PRT

CPU

Input/Output

IOS

IFC

Maus — MAS

BUS

Tastatur — TAST

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0065414 A

**In der Beschreibung aufgeführte Nicht-Patentliteratur**

- **GENE H. GOLUB ; CHARLES F. VAN LOAN.** Matrix Computations. The Johns Hopkins University Press, 1996